# EUROPEAN PATENT SPECIFICATION

(11) **EP 3 043 122 B1**
(45) Date of publication and mention of the grant of the patent: **17.04.2019**
(21) Application number: 13892786.8
(22) Date of filing: 06.09.2013
(51) Int. Cl.: F24H 1/18, F24D 17/02, F24D 19/10, F28D 20/00, G05D 23/19, F24H 1/00

(54) **HEAT STORAGE SYSTEM**
WÄRMESPEICHERSYSTEM
SYSTÈME DE STOCKAGE THERMIQUE

(43) Date of publication of application: 13.07.2016
(73) Proprietor: Mitsubishi Electric Corporation, Tokyo 100-8310 (JP)
(72) Inventor: AKAGI, Satoshi, Tokyo 100-8310 (JP); UNEZAKI, Fumitake, Tokyo 100-8310 (JP)
(74) Representative: Mewburn Ellis LLP
(86) International application number: PCT/JP2013/074073
(87) International publication number: WO 2015/033435

(56) References cited:
- JP-A- 2003 161 518
- JP-A- 2003 161 518
- JP-A- 2006 010 116
- JP-A- 2007 010 213
- JP-A- 2007 285 607
- JP-A- 2011 127 856

## Description

### Technical Field

The present invention relates to a heat storage system.

### Background Art

A heat storage system that stores a high temperature liquid in a tank to store heat is widely used. One type of the heat storage system is a hot water storage type hot water supply system. The hot water storage type hot water supply system is applied when a heating power of heating means is relatively low or when start-up of the power in activation of the heating means is slow as compared to an instantaneous hot water supply system. In the hot water storage type hot water supply system, hot water is previously generated by the heating means and stored in the tank so as to prevent depletion of hot water in the tank for generation of a hot water supply load. Then, the hot water in the tank is used to accommodate the hot water supply load.

Some hot water storage type hot water supply systems have, in addition to a function of supplying hot water for directly discharging hot water from a hot water tap, a function of reheating lukewarm bathwater by heat exchange with high temperature hot water in the tank. In such a system, heat needs to be previously stored in the tank so as to prevent shortage of a heat amount also for heat load of reheating bathwater.

Patent Literature 1 discloses a hot water storage type hot water supply system in which a hot water supply available heat storage amount and a bathwater-reheating available heat storage amount are calculated based on temperature distribution in a tank, and when the heat storage amounts are insufficient as compared to predicted hot water supply loads and bathwater-reheating loads, heating means is activated to feed cold water in a lower portion of the tank to the heating means and heat the water, and the heated hot water is returned to an upper portion of the tank to increase the heat storage amounts in the tank.

### Citation List

### Patent Literature

Patent Literature 1: Japanese Patent No. 5106567
Patent Literature 2: Japanese Patent Laid-Open No. 2011-2121

JP2011-127856 discloses a Storage Type Hot Water Supply Device.

JP2003-161518 discloses a a heat storage system according to the preamble of claim 1.

### Summary of Invention

### Technical Problem

Bathwater-reheating requires heat at a higher temperature than hot water supply. Thus, even if the tank contains stored heat at a middle temperature that does not reach a temperature available for bathwater-reheating, the stored heat cannot be used for bathwater-reheating. In the conventional hot water storage type hot water supply system, if a heat storage amount available for bathwater-reheating is insufficient while a heat storage amount available for hot water supply is sufficient, performing a heating operation to increase the heat storage amount available for bathwater-reheating unnecessarily increases a heat amount for hot water supply unavailable for bathwater-reheating. This shows room for improvement in terms of energy saving.

Also, in the conventional hot water storage type hot water supply system, if the heating operation is performed to increase a heat storage amount available for bathwater-reheating and then hot water supply is performed before bathwater-reheating, a hot water supply load that can be normally accommodated by stored heat at a middle temperature is accommodated by stored heat at a high temperature. This also shows room for improvement in terms of energy saving. Also in the same case, the heat storage amount at a high temperature for bathwater-reheating is reduced by hot water supply, which tends to again cause shortage of the heat storage amount for bathwater-reheating.

The present invention has been made to solve the problems as described above, and has an object to provide a heat storage system capable of saving energy while reliably avoiding both depletion of a heat storage amount for application using high temperature heat and depletion of a heat storage amount for application using middle temperature heat.

### Solution to Problem

A heat storage system according to the present invention is set forth in claim 1.

### Advantageous Effects of Invention

According to the heat storage system of the present invention, the first heat utilization path that uses the heat stored in the first region in the tank is separated from the second heat utilization path that uses the heat stored in the second region below the first region in the tank, and when it is predicted that a heat storage amount in the first region is insufficient while a heat storage amount in the second region is sufficient, the first region heating operation is performed. This increases only the heat storage amount in the first region without increasing the heat storage amount in the second region, thereby saving energy. For application that does not require a high temperature, the second heat utilization path is used to avoid a reduction in the heat storage amount at a high temperature for use in the first heat utilization path. This increases exergy efficiency, and can reliably avoid depletion of the heat storage amount at a high temperature for use in the first heat utilization path.

### Brief Description of Drawings

Figure 1 is a configuration diagram of a hot water storage type hot water supply system that is a heat storage system according to Embodiment 1 of the present invention.
Figure 2 is a block diagram showing flows of signals in the hot water storage type hot water supply system according to Embodiment 1 of the present invention.
Figure 3 is a flowchart showing a process when a control means controls an additional heating operation in the hot water storage type hot water supply system according to Embodiment 1 of the present invention.
Figure 4 diagrammatically show temperature distribution along a height direction in a tank of a conventional hot water storage type hot water supply system as a comparative example.
Figure 5 diagrammatically show temperature distribution along a height direction in a tank of a conventional hot water storage type hot water supply system as a comparative example.
Figure 6 diagrammatically shows changes in temperature distribution in the tank when the hot water storage type hot water supply system of Embodiment 1 performs a first region heating operation.
Figure 7 diagrammatically shows changes in temperature distribution in the tank when the hot water storage type hot water supply system of Embodiment 1 performs a second region heating operation.
Figure 8 diagrammatically shows changes in temperature distribution in the tank when the hot water storage type hot water supply system of Embodiment 1 performs a normal heating operation

### Description of Embodiment

Now, with reference to the drawings, an embodiment of the present invention will be described. Throughout the drawings, like components are denoted by like reference numerals, and overlapping descriptions will be omitted.

### Embodiment 1

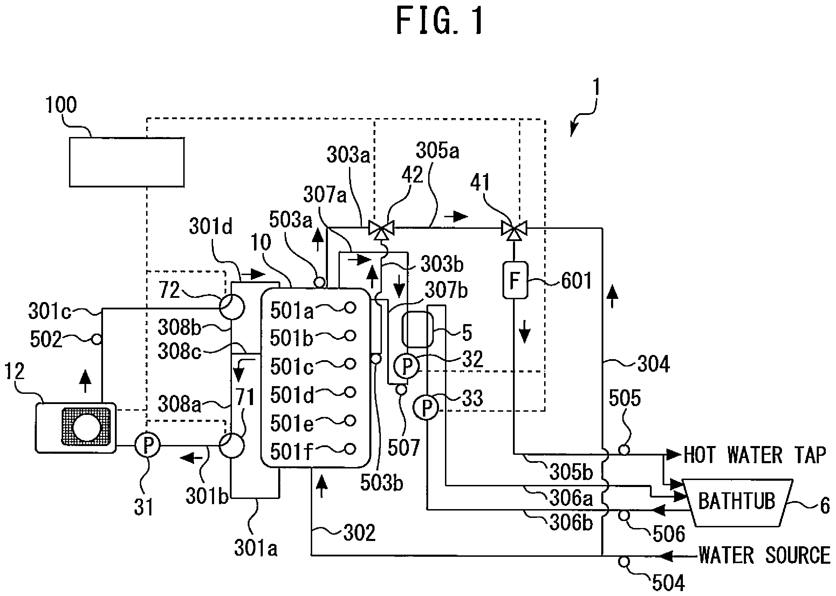

Figure 1 is a configuration diagram of a hot water storage type hot water supply system that is a heat storage system according to Embodiment 1 of the present invention. As shown in Figure 1, a hot water storage type hot water supply system 1 of this embodiment 1 includes a tank 10, heating means 12, a water feed pump 31, a water feed pump 32, a bathtub pump 33, a mixing valve 41, a mixing valve 42, a feed path switching valve 71, a return path switching valve 72, a bathwater-reheating heat exchanger 5, pipes described later, control means 100, or the like.

In the tank 10, water is stored so as to form temperature stratification with a high temperature upper side and a low temperature lower side. The tank 10 is kept filled with water. A capacity of the tank 10 is not particularly limited, but for example, is generally about 300 L to 600 L. The tank 10 has an upper portion, a middle height portion, and a lower portion from above. One end of a lower feed pipe 301a and one end of a water supply pipe 302 are connected to the lower portion of the tank 10. The other end of the lower feed pipe 301a is connected to the feed path switching valve 71. The other end of the water supply pipe 302 is connected to a water source such as waterworks. Low temperature water supplied from the water source flows through the water supply pipe 302 into the tank 10. A pressure reducing valve (not shown) is provided in a middle of the water supply pipe 302. Pressure of the water source is reduced to predetermined pressure by the pressure reducing valve and then acts in the tank 10.

One end of a middle pipe 308c and one end of a middle temperature water pipe 303b are connected to the middle height portion of the tank 10. The other end of the middle pipe 308c is divided into a middle feed pipe 308a and a middle return pipe 308b. The middle feed pipe 308a is connected to the feed path switching valve 71. The middle return pipe 308b is connected to the return path switching valve 72. The other end of the middle temperature water pipe 303b is connected to the mixing valve 42. The level of a connecting position between the middle temperature water pipe 303b and the tank 10 is preferably equal to or lower than the level of a connecting position between the middle pipe 308c and the tank 10. The level of the connecting position between the middle temperature water pipe 303b and the tank 10 may be higher than the level of the connecting position between the middle pipe 308c and the tank 10, but, in that case, is preferably close to the level of the connecting position between the middle pipe 308c and the tank 10. In this Embodiment 1, the middle pipe 308c and the middle temperature water pipe 303b are both connected to a slightly upper side than just half the height of the tank 10. In the description below, hot water taken out of the tank 10 through the middle pipe 308c and hot water taken out of the tank 10 through the middle temperature water pipe 303b are referred to as "middle temperature water" for convenience.

One end of an upper return pipe 301d, one end of a high temperature water pipe 303a, one end of a reheating feed pipe 307a, and one end of a reheating return pipe 307b are connected to the upper portion of the tank 10. The other end of the upper return pipe 301d is connected to the return path switching valve 72. The other end of the high temperature water pipe 303a is connected to the mixing valve 42. In the description below, hot water taken out of the tank 10 through the high temperature water pipe 303a is referred to as "high temperature water", and hot water taken out of the tank 10 through the reheating feed pipe 307a is referred to as "heat source water" for convenience. The other end of the reheating feed pipe 307a is connected to a heat source water inlet of the bathwater-reheating heat exchanger 5. The other end of the reheating return pipe 307b is connected to a heat source water outlet of the bathwater-reheating heat exchanger 5. The water feed pump 32 is connected to a middle of the reheating return pipe 307b, which is at a lower temperature than the reheating feed pipe 307a.

The heating means 12 has a function of heating water. The heating means 12 is configured using, for example, a heat pump, that is, a refrigeration cycle. When the heat pump is used, a fluid to be subjected to heat exchange with a refrigerant on a low pressure side may be any fluid such as outdoor air, groundwater, or solar hot water. Preferably, a heating power of the heating means 12 can be variably set. When the heat pump is used, for example, variably setting a rotational speed of a compressor using inverter control allows the heating power to be variably set. A refrigerant used in the heat pump may be CO₂ suitable for delivery of high temperature hot water. However, in order to increase operation efficiency in a characteristic operation of the present invention, a refrigerant that does not used in a supercritical state of the refrigerant is desirable, and for example, a typical fluorocarbon refrigerant, or a refrigerant such as propane and isobutane is preferable. In the description below, hot water heated by the heating means 12 is referred to as "heated water" for convenience.

The feed path switching valve 71 and an inlet of the heating means 12 are connected by a feed pipe 301b. The water feed pump 31 is connected to a middle of the feed pipe 301b, which is at a lower temperature than a return pipe 301c descried later. The feed path switching valve 71 can switch between the lower feed pipe 301a and the middle feed pipe 308a so as to be selectively connected to the feed pipe 301b. Figure 1 shows a state where the feed path switching valve 71 connects the middle feed pipe 308a to the feed pipe 301b. If the water feed pump 31 is driven in this state, the middle temperature water is taken out of the tank 10 through the middle pipe 308c, and the middle temperature water is fed through the middle feed pipe 308a, the feed path switching valve 71, and the feed pipe 301b to the heating means 12. Such a path corresponds to a middle feed path. On the other hand, if the feed path switching valve 71 switches the lower feed pipe 301a to be connected to the feed pipe 301b and then the water feed pump 31 is driven, the low temperature water is taken out of the tank 10 through the lower feed pipe 301a, and the low temperature water is fed through the feed path switching valve 71 and the feed pipe 301b to the heating means 12. Such a path corresponds to a lower feed path. The feed path switching valve 71 corresponds to feed path switching means for switching between the lower feed path and the middle feed path.

An outlet of the heating means 12 and the return path switching valve 72 are connected by the return pipe 301c. The return path switching valve 72 switches between the upper return pipe 301d and the middle return pipe 308b so as to be selectively connected to the return pipe 301c. Figure 1 shows the return path switching valve 72 connecting the upper return pipe 301d to the return pipe 301c. If the water feed pump 31 is driven in this state, heated water heated by the heating means 12 is returned through the return pipe 301c, the return path switching valve 72, and the upper return pipe 301d into the tank 10. Such a path corresponds to an upper return path. On the other hand, if the return path switching valve 72 switches the middle return pipe 308b to be connected to the return pipe 301c and then the water feed pump 31 is driven, heated water heated by the heating means 12 is returned through the return pipe 301c, the return path switching valve 72, the middle return pipe 308b, and the middle pipe 308c into the tank 10. Such a path corresponds to a middle return path. The return path switching valve 72 corresponds to return path switching means for switching between the upper return path and the middle return path.

One end of a hot water supply pipe 305a is further connected to the mixing valve 42. The mixing valve 42 mixes the middle temperature water flowing in from the middle temperature water pipe 303b and the high temperature water flowing in from the high temperature water pipe 303a, and causes the mixed hot water to flow out to the hot water supply pipe 305a. The mixing valve 42 can adjust a mixing ratio between the middle temperature water and the high temperature water. The mixing valve 42 can also cause only the middle temperature water to flow out to the hot water supply pipe 305a without being mixed with the high temperature water, and cause only the high temperature water to flow out to the hot water supply pipe 305a without being mixed with the middle temperature water.

The other end of the hot water supply pipe 305a is connected to the mixing valve 41. A water supply branch pipe 304 branching from a downstream side of the pressure reducing valve of the water supply pipe 302 and one end of a hot water supply pipe 305b are further connected to the mixing valve 41. The other end of the hot water supply pipe 305b is connected to a hot water tap such as a shower and a bathtub 6. The mixing valve 41 adjusts a mixing ratio between hot water flowing in from the hot water supply pipe 305a and low temperature water flowing in from the water supply branch pipe 304 to adjust a hot water supply temperature. The hot water adjusted in temperature by the mixing valve 41 is discharged through the hot water supply pipe 305b from the hot water tap such as a shower, or discharged into the bathtub 6 and stored. Hot water at about 40°C for a bath is stored in the bathtub 6. In the description below, hot water stored in the bathtub 6 is referred to as "bathwater" for convenience.

A bathwater pipe 306b takes the bathwater out of the bathtub 6, and feeds the bathwater to the bathwater-reheating heat exchanger 5. The bathwater-reheating heat exchanger 5 performs heat exchange between the heat source water taken out from the upper portion of the tank 10 and the bathwater. A bathwater pipe 306a returns the bathwater heated in the bathwater-reheating heat exchanger 5 to the bathtub 6. The bathtub pump 33 is connected to a middle of the bathwater pipe 306b, which is at a lower temperature than the bathwater pipe 306a. For an operation of reheating the bathtub 6, the water feed pump 32 and the bathtub pump 33 are driven. Thus, the heat source water at a high temperature taken out of the tank 10 is fed through the reheating feed pipe 307a to the bathwater-reheating heat exchanger 5. Also, the bathwater taken out of the bathtub 6 is fed through the bathwater pipe 306b to the bathwater-reheating heat exchanger 5. The bathwater-reheating heat exchanger 5 performs heat exchange between the heat source water and the bathwater. The bathwater draws heat from the heat source water, and thus the heat source water is reduced in temperature and returned through a reheating return pipe 307b into the tank 10. The bathwater receives heat from the heat source water, and is thus increased in temperature and returned through the bathwater pipe 306a into the bathtub 6.

The control means 100 controls operations of the heating means 12, the water feed pump 31, the water feed pump 32, the bathtub pump 33, the mixing valve 41, the mixing valve 42, the feed path switching valve 71, and the return path switching valve 72. The tank 10 is provided with hot water storage temperature sensors 501a to 501f at intervals along height direction. In the shown configuration, six hot water storage temperature sensors 501a to 501f are provided, but temperature sensors of a number enough for measuring temperature distribution in the tank 10 with high accuracy may be provided.

A heating temperature sensor 502 for detecting a temperature of the heated water heated by the heating means 12 is provided in the return pipe 301c. A water supply temperature sensor 504 for detecting a temperature of the low temperature water supplied from the water source, that is, a water supply temperature is provided in the water supply pipe 302. A high temperature water temperature sensor 503a for detecting temperatures of the high temperature water and the heat source water taken out from the upper portion of the tank 10 is provided on the tank 10. A middle temperature water temperature sensor 503b for detecting a temperature of the middle temperature water taken out of the tank 10 to the middle temperature water pipe 303b is provided in the connection between the middle temperature water pipe 303b and the tank 10. A hot water supply temperature sensor 505 for detecting a temperature of the hot water supplied to the hot water tap and the bathtub 6 is provided in the hot water supply pipe 305b. A bathwater temperature sensor 506 for detecting a temperature of the bathwater fed from the bathtub 6 to the bathwater-reheating heat exchanger 5 is provided in the bathwater pipe 306b. The bathwater temperature sensor 506 can be used as means for detecting a temperature of the bathtub 6 by regularly operating the bathtub pump 33. A heat source water return temperature sensor 507 for detecting a temperature of the heat source water returning from the bathwater-reheating heat exchanger 5 to the tank 10 is provided in the reheating return pipe 307b. Instead of the configuration in which the heat source water return temperature is directly detected and obtained by the heat source water return temperature sensor 507, the heat source water return temperature may be obtained by estimation based on a temperature of the heat source water before heat exchange detected by the high temperature water temperature sensor 503a, a temperature of the bathwater before heat exchange detected by the bathwater temperature sensor 506, a rotational speed of the water feed pump 32, a rotational speed of the bathtub pump 33, or the like. A hot water supply flow rate sensor 601 for detecting an amount of hot water supplied to the hot water tap and the bathtub 6 is provided in the hot water supply pipe 305b.

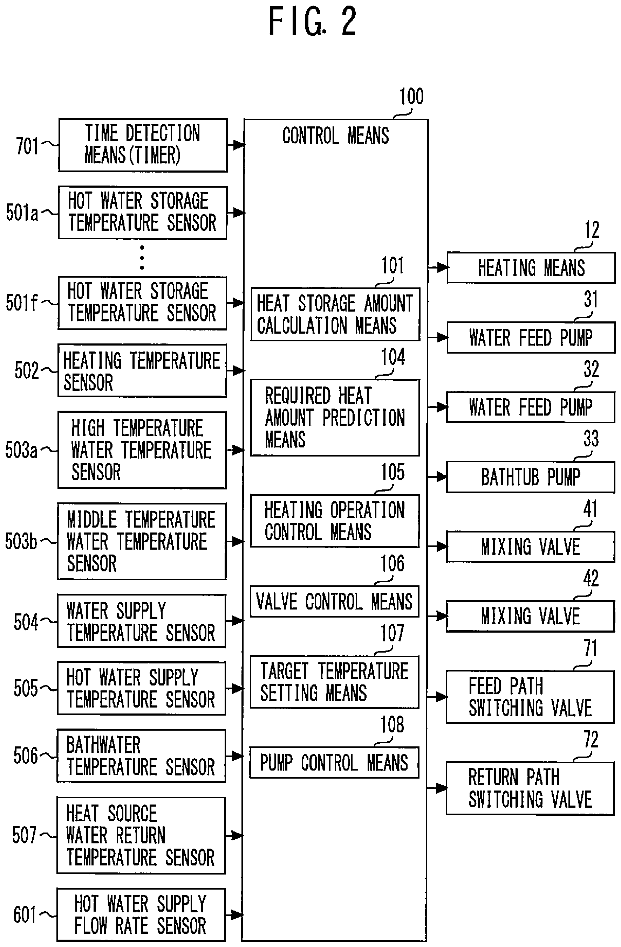

Figure 2 is a block diagram showing flows of signals in the hot water storage type hot water supply system 1 according to Embodiment 1 of the present invention. As shown in Figure 2, the control means 100 includes heat storage amount calculation means 101, required heat amount prediction means 104, heating operation control means 105, valve control means 106, target temperature setting means 107, pump control means 108, or the like.

Information from a timer 701 as time detection means, the hot water storage temperature sensors 501a to 501f, the heating temperature sensor 502, the high temperature water temperature sensor 503a, the middle temperature water temperature sensor 503b, the water supply temperature sensor 504, the hot water supply temperature sensor 505, the bathwater temperature sensor 506, the heat source water return temperature sensor 507, and the hot water supply flow rate sensor 601 is input to the control means 100. The control means 100 controls the heating means 12, the water feed pump 31, the water feed pump 32, the bathtub pump 33, the mixing valve 41, the mixing valve 42, the feed path switching valve 71, and the return path switching valve 72 based on the input information. The control means 100 is connected so as to be able to communicate with a user interface device (not shown) such as a remote controller device provided in, for example, a bath room or a kitchen.

The target temperature setting means 107 sets a target hot water supply temperature that is a target temperature of hot water supplied from the hot water supply pipe 305b to the hot water tap and the bathtub 6, and a target bathtub temperature that is a target temperature when the bathtub 6 is reheated and increased in temperature, based on user's instructions or the like input to the user interface device.

The heat storage amount calculation means 101 calculates, based on temperature distribution information detected by the hot water storage temperature sensors 501a to 501f, a hot water supply available heat storage amount that is a heat storage amount available for supplying hot water to the hot water tap and the bathtub 6 out of a heat storage amount of the hot water in the tank 10. For example, the heat storage amount calculation means 101 can integrate a value obtained by multiplying a difference between a hot water storage temperature of each portion in the tank 10 and the water supply temperature, which is a reference temperature of heat energy, by density and specific heat of water with respect to the capacity of the tank 10, thereby calculating the hot water supply available heat storage amount. Here, the heat storage amount calculation means 101 may calculate the hot water supply available heat storage amount only for a region of hot water whose temperature is not less than a predetermined temperature (for example, 45°C) in the tank 10.

The heat storage amount calculation means 101 calculates, based on the temperature distribution information detected by the hot water storage temperature sensors 501a to 501f and the target bathtub temperature set by the target temperature setting means 107, a bathwater-reheating available heat storage amount that is a heat storage amount available for bathwater-reheating out of the heat storage amount of the hot water in the tank 10. In the bathwater-reheating operation, the bathwater in the bathwater-reheating heat exchanger 5 draws heat from the heat source water at a high temperature fed to the bathwater-reheating heat exchanger 5, and thus the heat source water is reduced in temperature and then returned through the reheating return pipe 307b to the tank 10. Thus, heat energy available for bathwater-reheating out of heat energy of the hot water in the tank 10 is a portion obtained by subtracting the heat source water return temperature from the hot water storage temperature. Thus, the heat storage amount calculation means 101 can integrate a value obtained by multiplying a difference between the hot water storage temperature of each part in the tank 10 and the heat source water return temperature, which is a reference temperature of heat energy, by density and specific heat of water with respect to the capacity of the tank 10, thereby calculating the bathwater-reheating available heat storage amount. Here, the heat source water return temperature is predicted based on the target bathtub temperature set by the target temperature setting means 107, and the bathwater temperature detected by the bathwater temperature sensor 506. For example, the heat source water return temperature may be predicted by assuming that the temperature of the bathtub 6 is constant at the target bathtub temperature, and adding a predetermined temperature difference depending on performance of the bathwater-reheating heat exchanger 5 to the temperature. Alternatively, the heat source water return temperature may be predicted by assuming that the temperature of the bathtub 6 is constant at an average value between a current temperature of the bathtub 6 and the target bathtub temperature, and adding the predetermined temperature difference to the temperature.

As described later, in this Embodiment 1, a heat storage amount in the tank 10 below the connecting position between the tank 10 and the middle temperature water pipe 303b is used for supplying hot water to the hot water tap and the bathtub 6. A heat storage amount in the tank 10 above the connecting position between the tank 10 and the middle temperature water pipe 303b is used for reheating the bathtub 6. In this view, the heat storage amount calculation means 101 may calculate a hot water supply available heat storage amount in a region below the connecting position between the tank 10 and the middle temperature water pipe 303b, and calculate a bathwater-reheating available heat storage amount in a region above the connecting position between the tank 10 and the middle temperature water pipe 303b.

The required heat amount prediction means 104 predicts a heat storage amount required for avoiding depletion of the heat storage amount in the tank 10 as described below. First, the required heat amount prediction means 104 predicts a hot water supply required heat storage amount that is a heat storage amount required for a hot water supply load that is a load for supplying hot water from the hot water supply pipe 305b to the hot water tap and the bathtub 6. The required heat amount prediction means 104 predicts the hot water supply required heat storage amount based on information on user's past actual use of hot water supply or a predetermined design value. In a case of prediction based on the information on user's past actual use of hot water supply, for example, there is a method of daily storing and learning an actual hot water supply load for each time period based on information from, for example, the timer 701, the hot water supply temperature sensor 505, and the hot water supply flow rate sensor 601, and predicting a required heat amount so as to avoid depletion of the heat storage amount in the tank 10 for the learned actual hot water supply load also in view of a case where a heating operation with a predetermined heating power is simultaneously performed. The required heat amount can be obtained by subtracting an amount of heat that can be generated by the heating means 12 at predetermined time intervals from a sum of loads at the time intervals. In a case where a required heat amount is calculated for all cases that can be set as a start time and a finish time of the predetermined time intervals, and the required heat amount is determined using a maximum value thereof, a most reliable required heat amount can be obtained. In a case of determining a required heat amount based on a predetermined design value, for example, there is a method of setting a large required heat amount (for example, 300 L at 42°C) for a time period when a large volume of hot water supply load is generally predicted (for example, 5 to 11 p.m.), and setting a small required heat amount (for example, 50 L at 42°C) for the other time periods.

The required heat amount prediction means 104 predicts a bathwater-reheating required heat storage amount that is a heat storage amount required for a bathwater-reheating load that is a load for reheating the bathtub 6 based on information on user's past actual use of bathwater-reheating or a current temperature and hot water amount of the bathtub 6, or both. The bathwater-reheating load is a heat amount required for increasing the temperature of the bathtub 6 from the current temperature to a target bathtub temperature. The bathwater-reheating load is calculated by multiplying the hot water amount (for example, 200 L) in the bathtub 6 by a difference between the target bathtub temperature (for example, 40°C) and the current temperature of the bathtub 6 (for example, 30°C), density of water, and specific heat of water.

Here, as the value of the hot water amount in the bathtub 6, for example, a typical value (for example, 200 L) may be used, or a value set by the user with a user interface device may be used. The hot water amount in the bathtub 6 may be calculated by integrating a flow rate detected by the hot water supply flow rate sensor 601 when hot water is stored in the bathtub 6. Water level detection means such as a pressure sensor may be provided in the bathwater pipes 306a, 306b, and the hot water amount in the bathtub 6 may be obtained from a water level detected by the water level detection means. As a relationship between the hot water amount and the water level in the bathtub 6, a relationship between a hot water amount and a water level detected by the hot water supply flow rate sensor 601 when the hot water is stored in the bathtub 6 may be initially learned, or information on a size of the bathtub 6 may be input to the control means 100.

In a case of a system that learns and stores past bathwater-reheating loads, a bathwater-reheating load on the day may be predicted based on a maximum value or an average value within a past predetermined period of the learning results. Here, the bathwater-reheating load may be learned using a value calculated based on the hot water amount in the bathtub 6 and a difference in temperature between at start and at finish of the bathwater-reheating operation. Alternatively, the bathwater-reheating load may be learned using a value calculated based on a rate of flow circulated through the bathwater pipes 306a, 306b and a difference in temperature between at an outlet and at an inlet for the bathwater of the bathwater-reheating heat exchanger 5. The rate of flow circulated through the bathwater pipes 306a, 306b may be detected by a flow rate sensor (not shown), or detected indirectly from a control signal to the bathtub pump 33.

The required heat amount prediction means 104 may set the bathwater-reheating load itself as a bathwater-reheating required heat storage amount, or set a value obtained by subtracting an amount of heat that can be generated by the heating means 12 during the bathwater-reheating operation from the bathwater-reheating load as a bathwater-reheating required heat storage amount.

The heating operation control means 105 controls a heating operation described later so as to avoid depletion of the heat storage amount in the tank 10 for the predicted hot water supply load and bathwater-reheating load.

The valve control means 106 controls an operation of the mixing valve 41 so that a hot water supply temperature detected by the hot water supply temperature sensor 505 is close to the target hot water supply temperature set by the target temperature setting means 107. The valve control means 106 controls an operation of the mixing valve 42 so that a temperature of hot water fed from the mixing valve 42 to the mixing valve 41 is the target hot water supply temperature or higher. In the example in Figure 1, a channel configuration is shown in which the middle temperature water and the high temperature water are mixed or either the middle temperature water or the high temperature water is selected, and then the water is mixed with the low temperature water or either the water or the low temperature water is selected, but not limited to such a configuration. A channel configuration in which the middle temperature water and the low temperature water are mixed or either the middle temperature water or the low temperature water is selected, and then the water is mixed with the high temperature water or either the water and the high temperature water is selected, or a channel configuration in which the high temperature water and the low temperature water are mixed or either the high temperature water or the low temperature water is selected, and then the water is mixed with the middle temperature water or either the water or the middle temperature water is selected may be used.

The valve control means 106 performs control to change, using the feed path switching valve 71, whether water taken out through the lower feed pipe 301a is fed from the tank 10 to the heating means 12 or water taken out through the middle pipe 308c and the middle feed pipe 308a is fed from the tank 10 to the heating means 12. Further, the valve control means 106 performs control to change, using the return path switching valve 72, whether heated water returning from the heating means 12 to the tank 10 is caused to flow into the tank 10 through the upper return pipe 301d or heated water returning from the heating means 12 to the tank 10 is caused to flow into the tank 10 through the middle return pipe 308b and the middle pipe 308c.

The pump control means 108 controls respective rotational speeds of the water feed pump 31, the water feed pump 32, and the bathtub pump 33 to adjust a circulation amount by each pump.

The configuration of the hot water storage type hot water supply system 1 of this Embodiment 1 has been described above. Next, an operation of the hot water storage type hot water supply system 1 will be described.

### (Normal heating operation)

Here, a heating operation in a state where the feed path switching valve 71 is switched to the side of the lower feed pipe 301a, and the return path switching valve 72 is switched to the side of the upper return pipe 301d will be described. The heating operation in this state is the same as that of a conventional typical hot water storage type hot water supply system. For differentiation from a first region heating operation and a second region heating operation described later, the heating operation in this state is referred to as "normal heating operation". The low temperature water supplied from the water supply pipe 302 is stored in the lower portion of the tank 10. In the normal heating operation, the low temperature water is fed through the lower feed pipe 301a and the feed pipe 301b to the heating means 12 by the water feed pump 31. The heating means 12 heats water to generate heated water. The heated water flows through the return pipe 301c and the upper return pipe 301d into the upper portion in the tank 10.

### (Bathwater-reheating operation)

The bathwater-reheating operation for reheating the bathtub 6 is as described above. The bathwater-reheating operation is forced to start by a user's operation. If the bathtub 6 is set to be automatically kept warm, the bathtub pump 33 is regularly driven, the bathwater temperature sensor 506 detects the temperature of the bathtub 6, and the bathwater-reheating operation is automatically started when the detected temperature becomes lower than the target bathtub temperature by a predetermined amount. Then, the bathwater-reheating operation is automatically finished when the temperature of the bathtub 6 detected by the bathwater temperature sensor 506 becomes higher than the bathtub target temperature by a predetermined amount. In the bathwater-reheating operation, heat source water at a high temperature taken out of the reheating feed pipe 307a connected to the upper portion of the tank 10 is fed to the bathwater-reheating heat exchanger 5. Thus, heat stored in a part on the upper side in tank 10 is used for the bathwater-reheating operation. In the description below, the part on the upper side in the tank 10 used for the bathwater-reheating operation is referred to as "first region". In this Embodiment 1, the reheating feed pipe 307a, the bathwater-reheating heat exchanger 5, the reheating return pipe 307b, and the water feed pump 32 correspond to a first heat utilization path that uses heat stored in the first region in the tank 10.

### (Hot water supply operation)

In a hot water supply operation for supplying hot water to the hot water tap and the bathtub 6, a mixing ratio between middle temperature water and high temperature water in the mixing valve 42 is controlled so that the temperature of hot water fed from the mixing valve 42 to the mixing valve 41 is a target hot water supply temperature or higher. Also, a mixing ratio between hot water and low temperature water in the mixing valve 41 is controlled so that the hot water supply temperature detected by the hot water supply temperature sensor 505 is close to the target hot water supply temperature. In the hot water supply operation, low temperature water of an amount equal to the sum of high temperature water flowing through the high temperature water pipe 303a and middle temperature water flowing through the middle temperature water pipe 303b flows through the water supply pipe 302 into the lower portion in the tank 10. It is preferable that in the hot water supply operation, the high temperature water from the high temperature water pipe 303a is used as little as possible, and the middle temperature water from the middle temperature water pipe 303b is preferentially supplied for saving energy. Thus, the valve control means 106 desirably controls the mixing valve 42 so that when the temperature of the middle temperature water detected by the middle temperature water temperature sensor 503b is the target hot water supply temperature or higher, only the middle temperature water is fed to the mixing valve 41 without being mixed with the high temperature water. When the temperature of the middle temperature water detected by the middle temperature water temperature sensor 503b is lower than the target hot water supply temperature, the high temperature water from the high temperature water pipe 303a is mixed, but a mixing ratio of the high temperature water is desirably as low as possible.

The target hot water supply temperature is set by the user, and about 40°C to 45°C in most cases. A temperature in the middle height portion of the tank 10 to which the middle temperature water pipe 303b is connected is often not less than 45°C. Thus, in the hot water supply operation, the middle temperature water taken out of the tank 10 through the middle temperature water pipe 303b is mainly used, and the high temperature water taken out of the tank 10 through the high temperature water pipe 303a is less used. The middle temperature water taken out of the tank 10 through the middle temperature water pipe 303b is middle temperature water in the region below the connecting position to the middle temperature water pipe 303b in the tank 10. In the description below, this region is referred to as "second region". In the hot water supply operation, heat stored in the second region is mainly used. The connecting position between the tank 10 and the middle temperature water pipe 303b is below the first region used by the first heat utilization path. Thus, the second region mainly used in the hot water supply operation is located below the first region used by the first heat utilization path. In this Embodiment 1, the middle temperature water pipe 303b, the high temperature water pipe 303a, the mixing valves 41, 42, the hot water supply pipes 305a, 305b, and the water supply branch pipe 304 correspond to the second heat utilization path that mainly uses heat stored in the second region in the tank 10.

### (Midnight heating operation)

The hot water storage type hot water supply system 1 performs a heating operation for storing heat in the tank 10 during midnight hours in order to utilize inexpensive electricity prices for midnight hours or in preparation for a user household using hot water after rising. The midnight heating operation is performed using the normal heating operation. A heat storage amount generated by the midnight heating operation may corresponds to all of predicted hot water supply loads and bathwater-reheating loads for one day or may be about 80% thereof in view of a balance with energy saving. Heat may be stored in the entire tank 10 at about 65°C that is a relatively low temperature that reliably allows killing of Legionella. If the electricity price is uniform at all times, a minimum heat storage amount that can avoid depletion of the heat storage amount may be generated in the tank 10 so as to place top priority on energy saving. Alternatively, heat may be stored in the entire tank 10 at about 55°C since Legionella may not be daily killed.

### (Additional heating operation)

If a heat storage amount corresponding to all the predicted hot water supply loads and bathwater-reheating loads for one day is not generated in the midnight heating operation, an additional heating operation needs to be performed during daytime hours. Even if the heat storage amount corresponding to all the predicted hot water supply loads and bathwater-reheating loads for one day has been generated in the midnight heating operation, an additional heating operation is sometimes required when a hot water supply load or a bathwater-reheating load during daytime hours is larger than predicted. Hot water remaining in the tank 10 is reduced in temperature by heat dissipation after a lapse of long hours to reduce the heat storage amount, which sometimes requires an additional heating operation.

In this Embodiment 1, when the additional heating operation is performed, a first region heating operation or a second region heating operation described below may be performed as substitute for the normal hating operation described above.

### (First region heating operation)

In the first region heating operation, the feed path switching valve 71 is switched to the side of the middle feed pipe 308a, and the return path switching valve 72 is switched to the side of the upper return pipe 301d. In this state, the water feed pump 31 and the heating means 12 are operated. Thus, the middle temperature water is taken out of the tank 10 through the middle pipe 308c, and the middle temperature water is fed through the middle feed pipe 308a, the feed path switching valve 71, and the feed pipe 301b to the heating means 12. The heating means 12 heats the middle temperature water to generate heated water. The heated water flows through the return pipe 301c, the return path switching valve 72, and the upper return pipe 301d into the tank 10.

### (Second region heating operation)

In the second region heating operation, the feed path switching valve 71 is switched to the side of the lower feed pipe 301a, and the return path switching valve 72 is switched to the side of the middle return pipe 308b. In this state, the water feed pump 31 and the heating means 12 are operated. Thus, the low temperature water is taken out of the tank 10 through the lower feed pipe 301a, and the low temperature water is fed through the feed path switching valve 71 and the feed pipe 301b to the heating means 12. The heating means 12 heats the low temperature water to generate heated water. The heated water flows through the return pipe 301c, the return path switching valve 72, the middle return pipe 308b, and the middle pipe 308c into the tank 10.

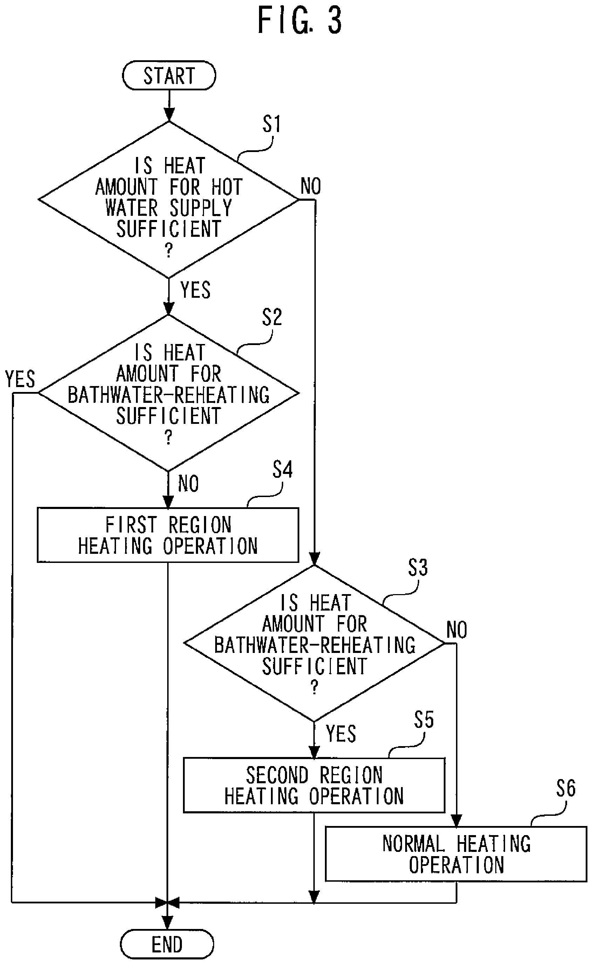

Figure 3 is a flowchart showing a process when the control means 100 controls the additional heating operation in this Embodiment 1. In step S1 in Figure 3, the control means 100 first predicts whether the hot water supply available heat storage amount is sufficient or insufficient. In this step S1, the hot water supply available heat storage amount calculated by the heat storage amount calculation means 101 is compared with the hot water supply required heat storage amount predicted by the required heat amount prediction means 104. If the hot water supply available heat storage amount is not less than the hot water supply required heat storage amount, it is predicted that the hot water supply available heat storage amount is sufficient. In this case, the process proceeds to step S2. On the other hand, when the hot water supply available heat storage amount is less than the hot water supply required heat storage amount, it is predicted that the hot water supply available heat storage amount is insufficient. In this case, the process proceeds to step S3. Predicting whether the hot water supply available heat storage amount is sufficient or insufficient in step S1 corresponds to predicting whether the heat storage amount for a demand of the second heat utilization path is sufficient or insufficient.

In step S2, it is predicted whether the bathwater-reheating available heat storage amount is sufficient or insufficient. In step S2, the bathwater-reheating available heat storage amount calculated by the heat storage amount calculation means 101 is compared with the bathwater-reheating required heat storage amount predicted by the required heat amount prediction means 104. If the bathwater-reheating available heat storage amount is not less than the bathwater-reheating required heat storage amount, it is predicted that the bathwater-reheating available heat storage amount is sufficient. In this case, both the hot water supply available heat storage amount and the bathwater-reheating available heat storage amount are sufficient and there is no need for the heating operation, and thus the process of this flowchart is finished. On the other hand, if the bathwater-reheating available heat storage amount is less than the bathwater-reheating required heat storage amount in step S2, it is predicted that the bathwater-reheating available heat storage amount is insufficient. In this case, the process proceeds to step S4. In step S4, the first region heating operation is performed. As such, when the hot water supply available heat storage amount is sufficient while the bathwater-reheating available heat storage amount is insufficient, the first region heating operation is performed.

In step S3, as in step S2, it is predicted whether the bathwater-reheating available heat storage amount is sufficient or insufficient. If it is predicted that the bathwater-reheating available heat storage amount is sufficient, the process proceeds to step S5. In step S5, the second region heating operation is performed. As such, when the bathwater-reheating available heat storage amount is sufficient while the hot water supply available heat storage amount is insufficient, the second region heating operation is performed. On the other hand, if it is predicted in step S3 that the bathwater-reheating available heat storage amount is insufficient, the process proceeds to step S6. In step S6, the normal heating operation is performed. As such, when both the hot water supply available heat storage amount and the bathwater-reheating available heat storage amount are insufficient, the normal heating operation is performed. Predicting whether the bathwater-reheating available heat storage amount is sufficient or insufficient in steps S2 and S3 corresponds to predicting whether the heat storage amount for a demand of the first heat utilization path is sufficient or insufficient.

Next, for easy understanding of advantages of this Embodiment 1, a comparative example will be first described. For simplicity of description, the temperature distribution in the tank 10 will be described in a more simplified manner than reality.

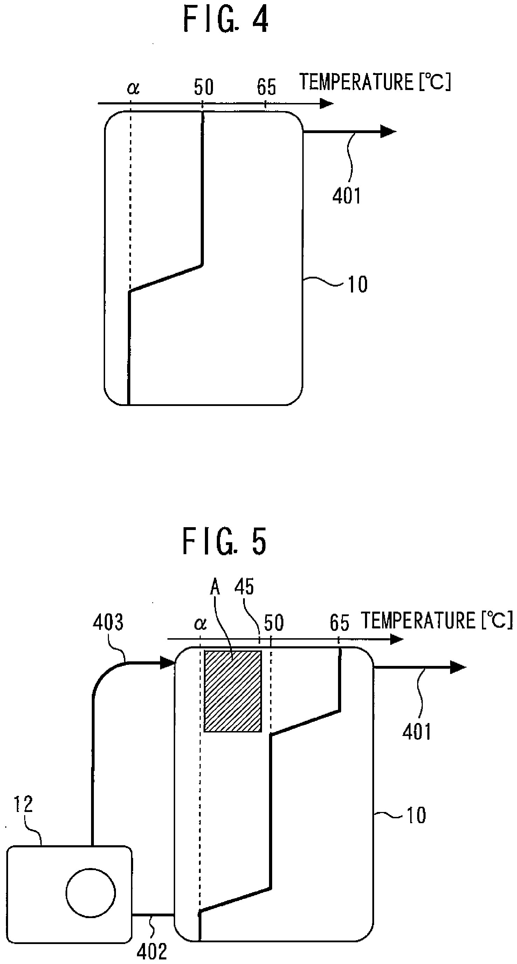

Figures 4 and 5 diagrammatically show temperature distribution along a height direction in a tank 10 of a conventional hot water storage type hot water supply system as a comparative example. In Figures 4 and 5, the abscissa represents temperature in the tank 10. Thick lines in the tank 10 in Figures 4 and 5 show temperature distribution along the height direction in the tank 10. As shown in Figure 4, in the hot water storage type hot water supply system of the comparative example, an upper pipe 401 is connected to an upper portion of the tank 10. Hot water to be supplied to the hot water tap and the bathtub 6 and hot water as heat source water for reheating the bathtub 6 are both taken out of the tank 10 through the upper pipe 401. Figure 5 shows a state after the heating operation is performed in the state in Figure 4. As shown in Figure 5, in the hot water storage type hot water supply system of the comparative example, a lower portion of the tank 10 and an inlet of heating means 12 are connected by a lower pipe 402, and an outlet of the heating means 12 and the upper portion of the tank 10 are connected by an upper pipe 403. The hot water storage type hot water supply system of the comparative example performs only one type of heating operation. Specifically, in the heating operation of the hot water storage type hot water supply system of the comparative example, low temperature water taken out of the tank 10 through the lower pipe 402 is fed to the heating means 12, and heated water heated by the heating means 12 flows from the upper pipe 403 into the tank 10.

A water supply temperature of the water supply pipe 302 changes depending on outside air temperatures or the like. In the description below, the water supply temperature is α°C. Figure 4 shows a state where an about upper half in the tank 10 contains hot water at 50°C, and an about lower half in the tank 10 contains low temperature water at the water supply temperature of α°C having flowed in from the water supply pipe 302. Such a state corresponds to, for example, a state where hot water remaining in the tank 10 is reduced in temperature by heat dissipation after a lapse of long hours. In the state in Figure 4, hot water at 50°C of 100 L or more remains in the tank 10. In such a case, for a hot water supply load, for example, a typical amount of shower for one person can be sufficiently accommodated. Thus, if the hot water supply load predicted to be arisen after this time point is about equal to the amount of shower for one person in the state in Figure 4, the heat storage amount for the hot water supply load is sufficient. However, if it is predicted that the bathwater-reheating load is arisen after this time point in the state in Figure 4, a heat storage amount for a bathwater-reheating load may be insufficient. As described above, heat energy available for bathwater-reheating out of heat energy of the hot water in the tank 10 is a portion obtained by subtracting the heat source water return temperature from the hot water storage temperature. The heat source water return temperature is higher than the temperature of the bathtub 6. Here, the heat source water return temperature is assumed to be 45°C. Then, in the state in Figure 4, only heat energy for 5°C that is a difference between the hot water storage temperature of 50°C and the heat source water return temperature of 45°C can be used for bathwater-reheating. Thus, it is difficult for the heat storage amount in Figure 4 to accommodate the bathwater-reheating load in view of a bathwater-reheating heat exchanger 5 having loss and completing bathwater-reheating within a reasonable time.

As in the case described above, the heat storage amount for the hot water supply load is sufficient while the heat storage amount for bathwater-reheating is insufficient in some cases. In such cases, the heating operation needs to be performed in preparation for the emergence of the bathwater-reheating load. If the heating operation is performed in the state in Figure 4, the state in Figure 5 is brought. In the heating operation in this example, the low temperature water at α°C taken out of the lower portion of the tank 10 is heated by the heating means 12 into heated water at 65°C, which is returned to the upper portion of the tank 10. Thus, in the state in Figure 5, hot water at 65°C is generated in the upper portion in the tank 10. The hot water at 65°C can accommodate the bathwater-reheating load. The region at 50°C in the tank 10 moves downward by an amount corresponding to the amount of water circulated in the heating operation.

The hot water storage type hot water supply system of the comparative example described above has problems (1) and (2) below.
(1) The heating means 12 heats the low temperature water at α°C to 65°C. Thus, heat energy corresponding to (65 - α)°C is applied. However, heat energy available for bathwater-reheating is a portion obtained by subtracting the heat source water return temperature from the hot water storage temperature and is only a portion of (65 - 45)°C. Thus, heat energy within a range A in Figure 5 out of heat energy applied in the heating operation for accommodating the bathwater-reheating load cannot be used for bathwater-reheating and is unavailable. This reduces energy efficiency.
(2) If hot water supply is performed before bathwater-reheating in the state in Figure 5, the hot water at 65°C stored for bathwater-reheating is taken out of the tank 10 through the upper pipe 401. This reduces the heat storage amount at a high temperature that can accommodate the bathwater-reheating load, and the heat storage amount for the bathwater-reheating load may be again insufficient. Although the middle temperature hot water at 50°C in the tank 10 can accommodate the hot water supply, the high temperature hot water at 65°C is consumed, and thus the middle temperature hot water at 50°C remains without being used, thereby reducing energy efficiency.

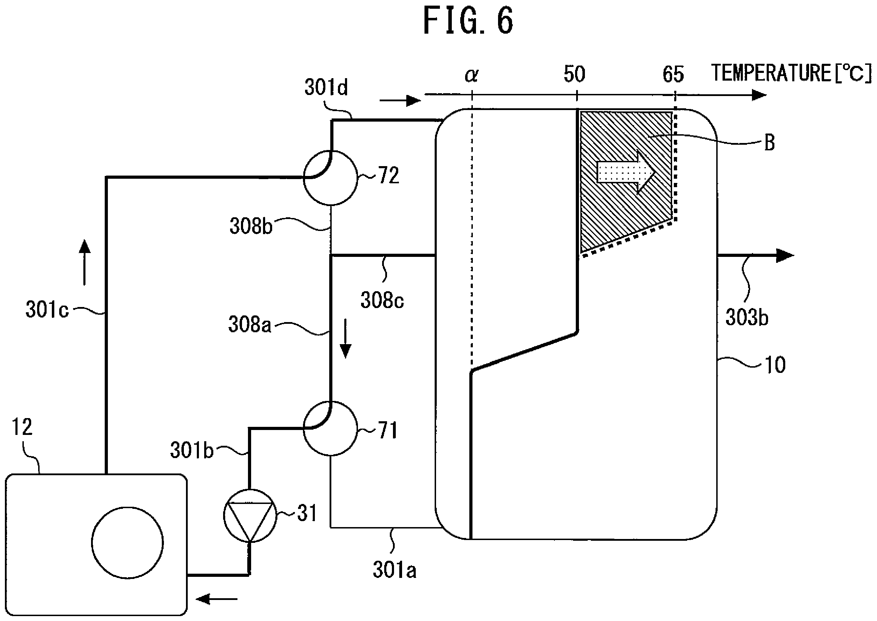

In contrast to this, the hot water storage type hot water supply system 1 of this Embodiment 1 can solve the problems (1) and (2) described above in the following manner. As described based on the flowchart in Figure 3, when it is predicted that the hot water supply available heat storage amount is sufficient while the bathwater-reheating available heat storage amount is insufficient, the hot water storage type hot water supply system 1 of this Embodiment 1 performs the first region heating operation. Figure 6 diagrammatically shows changes in temperature distribution in the tank 10 when the hot water storage type hot water supply system 1 of this Embodiment 1 performs the first region heating operation in the heat storage state as in Figure 4. A thick solid line in the tank 10 in Figure 6 shows temperature distribution before the first region heating operation is performed, and a thick broken line shows temperature distribution after the first region heating operation is performed.

In the first region heating operation in the example in Figure 6, middle temperature water at 50°C taken out of the tank 10 through the middle pipe 308c is heated by the heating means 12 into heated water at 65°C, and returned through the upper return pipe 301d into the tank 10. Thus, the hot water at 65°C is generated in the tank 10 from the upper portion, thereby increasing a heat storage amount in the first region in the tank 10. Heat energy applied in this first region heating operation corresponds to a portion of (65 - 50)°C as shown by B in Figure 6. Thus, all the heat energy applied in the first region heating operation can be available for bathwater-reheating. As such, according to the first region heating operation, only a heat amount available for bathwater-reheating can be generated without generating a heat amount unavailable for bathwater-reheating. This can solve the problem (1) described above, thereby saving energy.

If hot water supply is performed before bathwater-reheating in a state after the first region heating operation in Figure 6, the middle temperature water at 50°C in the tank 10 is supplied through the middle temperature water pipe 303b to the outside. Thus, even if the hot water supply is performed before bathwater-reheating after the first region heating operation, high temperature hot water at 65°C stored for bathwater-reheating is not consumed, thereby reliably preventing the heat storage amount for bathwater-reheating as a high temperature demand from being again insufficient. Also, the high temperature hot water at 65°C can be avoided to be consumed for hot water supply as a middle temperature demand, and the middle temperature water at 50°C remaining in the tank 10 can be available. This increases exergy efficiency and saves energy. This solves the problem (2) described above.

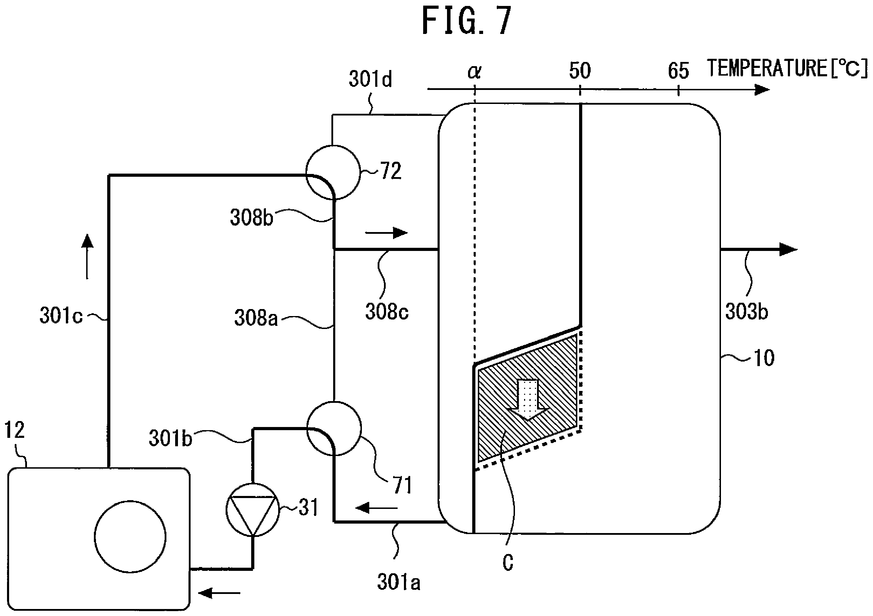

Further, in the hot water storage type hot water supply system 1 of this Embodiment 1, when it is predicted that the bathwater-reheating available heat storage amount is sufficient while the hot water supply available heat storage amount is insufficient, the second region heating operation is performed. This provides advantages as described below. In the description below, first, in the heat storage state as in Figure 4, it is predicted that no bathwater-reheating load is arisen and a large volume of hot water supply loads are arisen after this time point, and thus it is predicted that the bathwater-reheating available heat storage amount is sufficient while the hot water supply available heat storage amount is insufficient. As a result, the second region heating operation is performed in the heat storage state as in Figure 4. Figure 7 diametrically shows changes in temperature distribution in the tank 10 when the hot water storage type hot water supply system 1 of this Embodiment 1 performs the second region heating operation in the heat storage state as in Figure 4. A thick solid line in the tank 10 in Figure 7 shows temperature distribution before the second region heating operation is performed, and a thick broken line shows temperature distribution after the second region heating operation is performed.

In the second region heating operation in the example in Figure 7, low temperature water at α°C taken out of the tank 10 through the lower feed pipe 301a is heated by the heating means 12 into heated water at 50°C, and returned through the middle pipe 308c into the tank 10. Thus, a region at 50°C in the tank 10 expands downward to increase a heat storage amount in the second region in the tank 10. A range C in Figure 7 corresponds to heat energy applied in the second region heating operation. As such, in this Embodiment 1, when the bathwater-reheating available heat storage amount is sufficient while the hot water supply available heat storage amount is insufficient, the second region heating operation can be performed to intensively increase the heat storage amount in the second region used for the hot water supply operation. This allows the heat energy applied in the second region heating operation to be used for hot water supply without any waste, thereby increasing energy efficiency.

In the above example, the heating temperature in the first region heating operation is 65°C, while the heating temperature in the second region heating operation is 50°C. Generally, a hot water storage temperature required for hot water supply is lower than a hot water storage temperature required for bathwater-reheating, and thus the hot water generated in the second region heating operation needs not be at a very high temperature. Energy efficiency of the heating operation increases with decreasing heating temperature. Thus, as in the above example, the heating temperature in the second region heating operation is desirably lower than the heating temperature in the first region heating operation. This increases energy efficiency of the second region heating operation, thereby further saving energy.

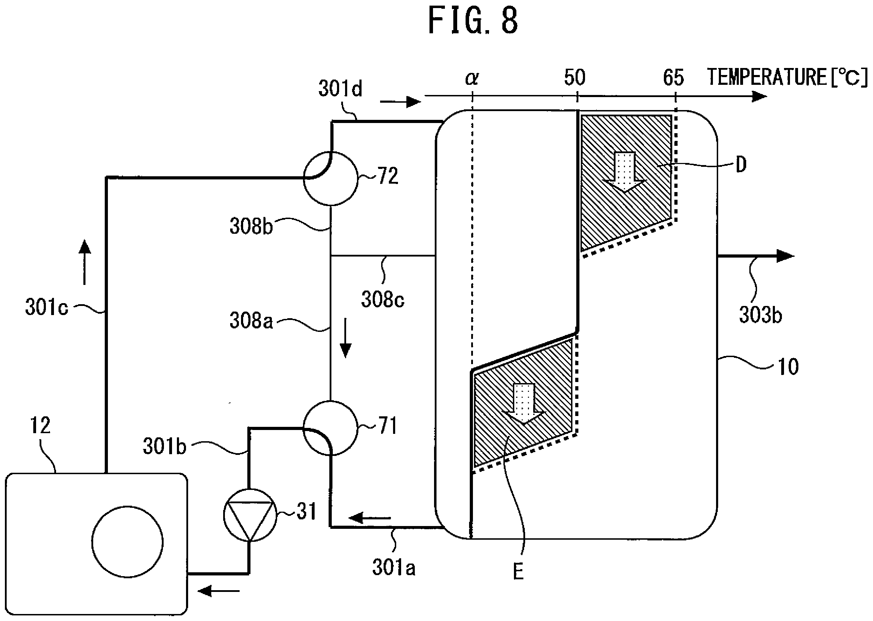

In the hot water storage type hot water supply system 1 of this Embodiment 1, when it is predicted that both the bathwater-reheating available heat storage amount and the hot water supply available heat storage amount are insufficient, the normal heating operation is performed. In the description below, the normal heating operation is performed in the heat storage state as in Figure 4. Figure 8 diagrammatically shows changes in temperature distribution in the tank 10 when the hot water storage type hot water supply system 1 of this Embodiment 1 performs the normal heating operation in the heat storage state as in Figure 4. A thick solid line in the tank 10 in Figure 8 shows temperature distribution before the normal heating operation is performed, and a thick broken line shows temperature distribution after the normal heating operation is performed.

In the normal heating operation in the example in Figure 8, low temperature water at α°C taken out of the tank 10 through the lower feed pipe 301a is heated by the heating means 12 into heated water at 65°C, and returned through the upper return pipe 301d into the tank 10. Thus, the hot water at 65°C is generated in the tank 10 from the upper portion, thereby increasing a heat storage amount in the first region in the tank 10. A range D in Figure 8 corresponds to a portion with an increased heat storage amount in the first region. The region at 50°C in the tank 10 moves downward by an amount corresponding to the amount of water circulated in the normal heating operation. This increases the heat storage amount in the second region in the tank 10. A range E in Figure 8 corresponds to a portion with an increased heat storage amount in the second region. As such, in this Embodiment 1, if both the bathwater-reheating available heat storage amount and the hot water supply available heat storage amount are insufficient, the normal heating operation can be performed to simultaneously increase both the heat storage amount in the first region and the heat storage amount in the second region. This can simultaneously increase both the heat storage amount for the bathwater-reheating load and the heat storage amount for the hot water supply load, thereby simultaneously eliminating shortage of both.

When the heating means 12 is a heat pump, a preferable refrigerant used in the heat pump is such that a refrigerant on a high pressure side has pressure lower than critical pressure, and for example, a typical fluorocarbon refrigerant, or propane or isobutane is preferable. Using such a refrigerant increases efficiency of the first region heating operation as compared to a case where a refrigerant such as CO₂ having pressure on a high pressure side higher than critical pressure, thereby further increasing overall energy efficiency.

### (Heating operation for ensuring minimum heat storage amount)

After heat storage for accommodating the predicted hot water supply loads and bathwater-reheating loads for one day is finished, ideally, the heat storage amount is not depleted without performing a heating operation. However, in order to reliably prevent depletion of the heat storage amount even when the amount used by the user exceeds a predicted amount, a heating operation for ensuring a predetermined minimum heat storage amount may be performed in the following manner. The minimum heat storage amount may be, for example, a heat storage amount that allows hot water of 50 L at 42°C to be supplied, or a heat storage amount that allows bathwater-reheating for increasing a temperature of the bathtub 6 having a hot water amount of 180 L by 3°C. The control means 100 starts the normal heating operation for ensuring the minimum heat storage amount when the heat storage amount in the tank 10 becomes less than the minimum heat storage amount, and after the heat storage amount in the tank 10 reaches the minimum heat storage amount or more, the normal heating operation is finished.

In this Embodiment 1, the middle pipe 308c is shared by the middle feed path and the middle return path. Thus, there is no need to separately provide a connection between the middle feed path and the tank 10 and a connection between the middle return path and the tank 10, and the connections can be shared, thereby simplifying a structure and reducing costs. However, in the present invention, the connection between the middle feed path and the tank 10 and the connection between the middle return path and the tank 10 may be separately provided.

In this Embodiment 1 described above, the example in which the heat storage system of the present invention is applied to the hot water storage type hot water supply system has been described, but not limited to the hot water storage type hot water supply system, the present invention may be applied to, for example, a heat storage system for an indoor heating. In this Embodiment 1, the example in which the liquid stored in the tank 10 is water has been described, but the present invention may be applied to, for example, a heat storage system that stores a liquid other than water such as an antifreeze as a heat medium in a tank. In this Embodiment 1, the example in which the bathwater-reheating heat exchanger 5 is located outside the tank 10 has been described, but in the present invention, the heat exchanger in the first heat utilization path may be provided in the tank. In this Embodiment 1, the example in which bathwater is heated by the bathwater-reheating heat exchanger 5 has been described, but not limited to the bathwater, for example, a circulated fluid for an indoor heating or the like may be heated by the heat exchanger in the first heat utilization path in the present invention. The first heat utilization path is not limited to a path using the heat exchanger, but may be a path that supplies a liquid in the tank to the outside. In this Embodiment 1, the example in which the second heat utilization path is configured to supply the hot water in the tank 10 to the outside has been described, but in the present invention, the second heat utilization path may include a heat exchanger for performing heat exchange between a liquid in the tank and a material to be heated. In this Embodiment 1, the heating means 12 uses the heat pump, but the heating means in the present invention is not limited to the heat pump, but may be an electric heater, a boiler, a solar collector, or the like.

### Reference Signs List

- 1: hot water storage type hot water supply system
- 5: bathwater-reheating heat exchanger
- 6: bathtub
- 10: tank
- 12: heating means
- 31, 32: water feed pump
- 33: bathtub pump
- 41, 42: mixing valve
- 71: feed path switching valve
- 72: return path switching valve
- 100: control means
- 101: heat storage amount calculation means
- 104: required heat amount prediction means
- 105: heating operation control means
- 106: valve control means
- 107: target temperature setting means
- 108: pump control means
- 301a: lower feed pipe
- 301b: feed pipe
- 301c: return pipe
- 301d: upper return pipe
- 302: water supply pipe
- 303a: high temperature water pipe
- 303b: middle temperature water pipe
- 304: water supply branch pipe
- 305a, 305b: hot water supply pipe
- 306a, 306b: bathwater pipe
- 307a: reheating feed pipe
- 307b: reheating return pipe
- 308a: middle feed pipe
- 308b: middle return pipe
- 308c: middle pipe
- 401, 403: upper pipe
- 402: lower pipe
- 501a, 501b, 501c, 501d, 501e, 501f: hot water storage temperature sensor
- 502: heating temperature sensor
- 503a: high temperature water temperature sensor
- 503b: middle temperature water temperature sensor
- 504: water supply temperature sensor
- 505: hot water supply temperature sensor
- 506: bathwater temperature sensor
- 507: heat source water return temperature sensor
- 601: hot water supply flow rate sensor
- 701: timer

## Claims

1. A heat storage system comprising:
a tank (10) configured to store a liquid so as to form temperature stratification with a high temperature upper side and a low temperature lower side;
heating means (12) for heating the liquid;
a first heat utilization path (5, 32, 307a, 307b) configured to use heat stored in a first region that is a part on a upper side in the tank (10);
a second heat utilization path (41, 42, 303a, 303b, 304, 305a, 305b) configured to mainly use heat stored in a second region below the first region in the tank (10);
a lower feed path (31, 71, 301a, 301b) configured to take out the liquid through a pipe (301a) connected to a lower portion of the tank (10), the lower feed path (31, 71, 301a, 301b) being configured to feed the liquid to the heating means (12);
a middle feed path (31, 71, 301b, 308a, 308c) configured to take out the liquid through a pipe (308c) connected to a middle height portion of the tank (10), the middle feed path (31, 71, 30ab, 308a, 308c) being configured to feed the liquid to the heating means (12);
feed path switching means (71) for switching between the lower feed path (31, 71, 301a, 301b) and the middle feed path (31, 71, 301b, 308a, 308c);
an upper return path (72, 301c, 301d) configured to return the liquid heated by the heating means (12) through a pipe (301d) connected to an upper portion of the tank (10) into the tank (10); and
control means (100) for performing a first region heating operation for feeding the liquid to the heating means (12) using the middle feed path (31, 71, 301b, 308a, 308c), and returning the liquid heated by the heating means (12) into the tank (10) using the upper return path (72, 301c, 301d);
**characterized in that** the control means (100) is configured to:
predict whether a heat storage amount for a demand of the first heat utilization path (5, 32, 307a, 307b) is sufficient or insufficient;
predict whether a heat storage amount for a demand of the second heat utilization path (41, 42, 303a, 303b, 304, 305a, 305b) is sufficient or insufficient; and
perform, when it is predicted that the heat storage amount for the demand of the first heat utilization path (5, 32, 307a, 307b) is insufficient while the heat storage amount for the demand of the second heat utilization path (41, 42, 303a, 303b, 304, 305a, 305b) is sufficient, the first region heating operation.

2. The heat storage system according to claim 1, further comprising:
a middle return path (72, 301c, 308b, 308c) configured to return the liquid heated by the heating means (12) through a pipe (308c) connected to the middle height portion of the tank (10) into the tank (10); and
return path switching means (72) for switching between the upper return path (72, 301c, 301d) and the middle return path (72, 301c, 308b, 308c),
wherein the control means (100) is configured to perform, when it is predicted that the heat storage amount for the demand of the second heat utilization path (41, 42, 303a, 303b, 304, 305a, 305b) is insufficient while the heat storage amount for the demand of the first heat utilization path (5, 32, 307a, 307b) is sufficient, a second region heating operation for feeding the liquid to the heating means (12) using the lower feed path (31, 71, 301a, 301b), and returning the liquid heated by the heating means (12) into the tank (10) using the middle return path (72, 301c, 308b, 308c).

3. The heat storage system according to claim 2, wherein a heating temperature by the heating means (12) in the second region heating operation is lower than a heating temperature by the heating means (12) in the first region heating operation.

4. The heat storage system according to claim 2 or 3, wherein the pipe (308c) of the middle feed path (31, 71, 301b, 308a, 308c) is used as the pipe (308c) of the middle return path (72, 301c, 308b, 308c).

5. The heat storage system according to any one of claims 1 to 4,
wherein the control means (100) is configured to perform, when it is predicted that the heat storage amount for the demand of the first heat utilization path (5, 32, 307a, 307b) is insufficient while the heat storage amount for the demand of the second heat utilization path (41, 42, 303a, 303b, 304, 305a, 305b) is insufficient, a heating operation for feeding the liquid to the heating means (12) using the lower feed path (31, 71, 301a, 301b), and returning the liquid heated by the heating means (12) into the tank (10) using the upper return path (72, 301c, 301d).

6. The heat storage system according to any one of claims 1 to 5, wherein the first heat utilization path (5, 32, 307a, 307b) includes a heat exchanger (5) for heating a material to be heated using heat of the liquid in the first region.

7. The heat storage system according to any one of claims 1 to 6, wherein the second heat utilization path (41, 42, 303a, 303b, 304, 305a, 305b) has a path for taking out the liquid through a pipe (303b) connected to the middle height portion of the tank (10), and supplying the liquid to an outside.

8. The heat storage system according to any one of claims 1 to 7, wherein the heating means (12) is a heat pump, and refrigerant pressure on a high pressure side of the heat pump is lower than critical pressure.

9. The heat storage system according to any one of claims 1 to 8, wherein the liquid is water, and the heat storage system is used as a hot water storage type hot water supply system (1).

## Patentansprüche

1. Wärmespeichersystem, Folgendes umfassend:
einen Behälter (10), der konfiguriert ist, um eine Flüssigkeit zu speichern, um eine Temperaturschichtung, die eine Oberseite mit hoher Temperatur und eine Unterseite mit niedriger Temperatur aufweist, auszubilden;
ein Erwärmungsmittel (12) zum Erwärmen der Flüssigkeit;
einen ersten Wärmenutzungspfad (5, 32, 307a, 307b), der konfiguriert ist, um Wärme zu verwenden, die in einer ersten Region gespeichert ist, welche ein Teil auf einer Oberseite im Behälter (10) ist;
einen zweiten Wärmenutzungspfad (41, 42, 303a, 303b, 304, 305a, 305b), der konfiguriert ist, um größtenteils Wärme zu verwenden, die in einer zweiten Region unterhalb der ersten Region im Behälter (10) gespeichert ist;
einen unteren Zufuhrpfad (31, 71, 301a, 301b), der konfiguriert ist, um die Flüssigkeit über ein Rohr (301a), das mit einem unteren Abschnitt des Behälters (10) verbunden ist, zu entnehmen, wobei der untere Zufuhrpfad (31, 71, 301a, 301b) konfiguriert ist, um die Flüssigkeit dem Erwärmungsmittel (12) zuzuführen;
einen mittleren Zufuhrpfad (31, 71, 301b, 308a, 308b), der konfiguriert ist, um die Flüssigkeit über ein Rohr (308c), das mit einem mittelhohen Abschnitt des Behälters (10) verbunden ist, zu entnehmen, wobei der mittlere Zufuhrpfad (31, 71, 301b, 308a, 308b) konfiguriert ist, um die Flüssigkeit dem Erwärmungsmittel (12) zuzuführen;
ein Zufuhrpfadumschaltmittel (71), um zwischen dem unteren Zufuhrpfad (31, 71, 301a, 301b) und dem mittleren Zufuhrpfad (31, 71, 301b, 308a, 308b) umzuschalten;
einen oberen Rückführpfad (72, 301c, 301d), der konfiguriert ist, um die durch das Erwärmungsmittel (12) erhitzte Flüssigkeit über ein Rohr (301d), welches mit einem oberen Abschnitt des Behälters (10) verbunden ist, in den Behälter (10) zurückzuführen; und
ein Steuerungsmittel (100) zum Durchführen eines ersten Regionerwärmungsvorgangs, um die Flüssigkeit unter Verwendung des mittleren Zufuhrpfads (31, 71, 301b, 308a, 308b) dem Erwärmungsmittel (12) zuzuführen und die durch das Erwärmungsmittel (12) erhitzte Flüssigkeit unter Verwendung des oberen Rückführpfads (72, 301c, 301d) in den Behälter (10) zurückzuführen;
**dadurch gekennzeichnet, dass** das Steuermittel (100) konfiguriert ist, um:
vorherzusagen, ob eine Wärmespeichermenge für einen Bedarf des ersten Wärmenutzungspfads (5, 32, 307a, 307b) ausreichend oder nicht ausreichend ist;
vorherzusagen, ob eine Wärmespeichermenge für einen Bedarf des zweiten Wärmenutzungspfads (41, 42, 303a, 303b, 304, 305a, 305b) ausreichend oder nicht ausreichend ist; und
den ersten Regionerwärmungsvorgang durchzuführen, wenn vorhergesagt wird, dass die Wärmespeichermenge für den Bedarf des ersten Wärmenutzungspfads (5, 32, 307a, 307b) nicht ausreichend ist, während die Wärmespeichermenge für den Bedarf des zweiten Wärmenutzungspfads (41, 42, 303a, 303b, 304, 305a, 305b) ausreichend ist.

2. Wärmespeichersystem nach Anspruch 1, ferner Folgendes umfassend:
einen mittleren Rückführpfad (72, 301c, 308b, 308c), der konfiguriert ist, um die durch das Erwärmungsmittel (12) erhitzte Flüssigkeit über ein Rohr (308c), das mit dem mittelhohen Abschnitt des Behälters (10) verbunden ist, in den Behälter (10) zurückzuführen; und
ein Rückführpfadumschaltmittel (72) zum Umschalten zwischen dem oberen Rückführpfad (72, 301c, 301d) und dem mittleren Rückführpfad (72, 301c, 308b, 308c);
wobei, wenn vorhergesagt wird, dass die Wärmespeichermenge für den Bedarf des zweiten Wärmenutzungspfads (41, 42, 303a, 303b, 304, 305a, 305b) nicht ausreichend ist, während die Wärmespeichermenge für den Bedarf des ersten Wärmenutzungspfads (5, 32, 307a, 307b) ausreichend ist, das Steuerungsmittel (100) konfiguriert ist, um einen zweiten Regionerwärmungsvorgang zum Zuführen der Flüssigkeit zum Erwärmungsmittel (12) unter Verwendung des unteren Zufuhrpfads (31, 71, 301a, 301b) durchzuführen und die durch das Erwärmungsmittel (12) erhitzte Flüssigkeit unter Verwendung des mittleren Rückführpfads (72, 301c, 308b, 308c) in den Behälter (10) zurückzuführen.

3. Wärmespeichersystem nach Anspruch 2, wobei die Erwärmungstemperatur durch das Erwärmungsmittel (12) im zweiten Regionerwärmungsvorgang niedriger ist als die Erwärmungstemperatur durch das Erwärmungsmittel (12) im ersten Regionerwärmungsvorgang.

4. Wärmespeichersystem nach Anspruch 2 oder 3, wobei das Rohr (308c) des mittleren Zufuhrpfads (31, 71, 301b, 308a, 308c) als das Rohr (308c) des mittleren Rückführpfads (72, 301c, 308b, 308c) verwendet wird.

5. Wärmespeichersystem nach einem der Ansprüche 1 bis 4, wobei, wenn vorhergesagt wird, dass die Wärmespeichermenge für den Bedarf des ersten Wärmenutzungspfads (5, 32, 307a, 307b) nicht ausreichend ist, während die Wärmespeichermenge für den Bedarf des zweiten Wärmenutzungspfads (41, 42, 303a, 303b, 304, 305a, 305b) ausreichend ist, das Steuerungsmittel (100) konfiguriert ist, um einen Erwärmungsvorgang zum Zuführen der Flüssigkeit zum Erwärmungsmittel (12) unter Verwendung des unteren Zufuhrpfads (31, 71, 301a, 301b) durchzuführen und die durch das Erwärmungsmittel (12) erhitzte Flüssigkeit unter Verwendung des oberen Rückführpfads (72, 301c, 301d) in den Behälter (10) zurückzuführen.

6. Wärmespeichersystem nach einem der Ansprüche 1 bis 5, wobei der erste Wärmenutzungspfad (5, 32, 307a, 307b) einen Wärmetauscher (5) zum Erwärmen des zu erwärmenden Materials unter Verwendung von Wärme der Flüssigkeit in der ersten Region umfasst.

7. Wärmespeichersystem nach einem der Ansprüche 1 bis 6, wobei der zweite Wärmenutzungspfad (41, 42, 303a, 303b, 304, 305a, 305b) einen Pfad zum Entnehmen der Flüssigkeit über ein Rohr (303b), das mit dem mittelhohen Abschnitt des Behälters (10) verbunden ist, und zum Zuführen der Flüssigkeit nach außen aufweist.

8. Wärmespeichersystem nach einem der Ansprüche 1 bis 7, wobei das Erwärmungsmittel (12) eine Wärmepumpe ist und wobei Kühldruck auf einer Hochdruckseite der Wärmepumpe geringer als der kritische Druck ist.

9. Wärmespeichersystem nach einem der Ansprüche 1 bis 8, wobei die Flüssigkeit Wasser ist und das Wärmespeichersystem als Warmwasserzufuhrsystem (1) des Warmwasserspeichertyps verwendet wird.

## Revendications

1. Système de stockage de chaleur comprenant :
un réservoir (10) configuré pour stocker un liquide afin de former une stratification de températures avec un côté supérieur haute température et un côté inférieur basse température ;
des moyens de chauffage (12) pour chauffer le liquide ;
un premier trajet d'utilisation de chaleur (5, 32, 307a, 307b) configuré pour utiliser de la chaleur stockée dans une première zone qui fait partie d'un côté supérieur du réservoir (10) ;
un second trajet d'utilisation de chaleur (41, 42, 303a, 303b, 304, 305a, 305b) configuré pour utiliser principalement de la chaleur stockée dans une seconde zone située au-dessous de la première zone du réservoir (10) ;
un trajet d'alimentation inférieur (31, 71, 301a, 301b) configuré pour extraire le liquide à travers un tuyau (301a) connecté à une partie inférieure du réservoir (10), le trajet d'alimentation inférieur (31, 71, 301a, 301b) étant configuré pour alimenter le liquide vers les moyens de chauffage (12) ;
un trajet d'alimentation médian (31, 71, 301b, 308a, 308c) configuré pour extraire le liquide à travers un tuyau (308c) connecté à une partie de hauteur médiane du réservoir (10), le trajet d'alimentation médian (31, 71, 30ab, 308a, 308c) étant configuré pour alimenter le liquide vers les moyens de chauffage (12) ;
des moyens de commutation de trajet d'alimentation (71) pour commuter entre le trajet d'alimentation inférieur (31, 71, 301a, 301b) et le trajet d'alimentation médian (31, 71, 301b, 308a, 308c) ;
un trajet de retour supérieur (72, 301c, 301d) configuré pour renvoyer le liquide chauffé par les moyens de chauffage (12) à travers un tuyau (301d) connecté à une partie supérieure du réservoir (10) jusque dans le réservoir (10) ; et
des moyens de commande (100) pour effectuer une opération de chauffage de première zone pour alimenter le liquide vers les moyens de chauffage (12) en utilisant le trajet d'alimentation médian (31, 71, 301b, 308a, 308c) et pour renvoyer le liquide chauffé par les moyens de chauffage (12) jusque dans le réservoir (10) en utilisant le trajet de retour supérieur (72, 301c, 301d) ;
**caractérisé en ce que** les moyens de commande (100) sont configurés pour :
prédire si une quantité de stockage de chaleur pour une demande du premier trajet d'utilisation de chaleur (5, 32, 307a, 307b) est suffisante ou insuffisante ;
prédire si une quantité de stockage de chaleur pour une demande du second trajet d'utilisation de chaleur (41, 42, 303a, 303b, 304, 305a, 305b) est suffisante ou insuffisante ; et
effectuer, lorsqu'il est prédit que la quantité de stockage de chaleur pour la demande du premier trajet d'utilisation de chaleur (5, 32, 307a, 307b) est insuffisante, tandis que la quantité de stockage de chaleur pour la demande du second trajet d'utilisation de chaleur (41, 42, 303a, 303b, 304, 305a, 305b) est suffisante, l'opération de chauffage de première zone.

2. Système de stockage de chaleur selon la revendication 1, comprenant en outre :
un trajet de retour médian (72, 301c, 308b, 308c) configurée pour renvoyer le liquide chauffé par les moyens de chauffage (12) à travers un tuyau (308c) connecté à la partie de hauteur médiane du réservoir (10) jusque dans le réservoir (10) ; et
des moyens de commutation de trajet de retour (72) pour commuter entre le trajet de retour supérieur (72, 301c, 301d) et le trajet de retour médian (72, 301c, 308b, 308c),
dans lequel les moyens de commande (100) sont configurés pour effectuer, lorsqu'il est prédit que la quantité de stockage de chaleur pour la demande du second trajet d'utilisation de chaleur (41, 42, 303a, 303b, 304, 305a, 305b) est insuffisante alors que la chaleur la quantité de stockage pour la demande du premier trajet d'utilisation de chaleur (5, 32, 307a, 307b) est suffisante, une opération de chauffage de seconde zone pour alimenter le liquide vers les moyens de chauffage (12) en utilisant le trajet d'alimentation inférieur (31, 71, 301a , 301b), et renvoyer le liquide chauffé par les moyens de chauffage (12) jusque dans le réservoir (10) en utilisant le trajet de retour médian (72, 301c, 308b, 308c).

3. Système de stockage de chaleur selon la revendication 2, dans lequel une température de chauffage par les moyens de chauffage (12) dans l'opération de chauffage de seconde zone est inférieure à une température de chauffage par les moyens de chauffage (12) dans l'opération de chauffage de la première zone.

4. Système de stockage de chaleur selon la revendication 2 ou 3, dans lequel le tuyau (308c) du trajet d'alimentation médian (31, 71, 301b, 308a, 308c) est utilisé en tant que tuyau (308c) du trajet de retour médian (72, 301c, 308b, 308c).

5. Accumulateur de chaleur selon l'une quelconque des revendications 1 à 4,
dans lequel les moyens de commande (100) sont configurés pour effectuer, lorsqu'il est prédit que la quantité de stockage de chaleur pour la demande du premier trajet d'utilisation de chaleur (5, 32, 307a, 307b) est insuffisante, tandis que la quantité de stockage de chaleur pour la demande du second trajet d'utilisation de chaleur (41, 42, 303a, 303b, 304, 305a, 305b) est insuffisante, une opération de chauffage pour alimenter le liquide vers les moyens de chauffage (12) en utilisant le trajet d'alimentation inférieur (31, 71, 301a, 301b), et renvoyer le liquide chauffé par les moyens de chauffage (12) jusque dans le réservoir (10) en utilisant le trajet de retour supérieur (72, 301c, 301d).

6. Système de stockage de chaleur selon l'une quelconque des revendications 1 à 5, dans lequel le premier trajet d'utilisation de chaleur (5, 32, 307a, 307b) comprend un échangeur de chaleur (5) pour chauffer un matériau à chauffer en utilisant la chaleur du liquide dans la première zone.

7. Système de stockage de chaleur selon l'une quelconque des revendications 1 à 6, dans lequel le second trajet d'utilisation de la chaleur (41, 42, 303a, 303b, 304, 305a, 305b) a un trajet pour extraire le liquide à travers un tuyau (303b) connecté à la partie de hauteur médiane du réservoir (10), et alimenter le liquide vers un extérieur.

8. Système de stockage de chaleur selon l'une quelconque des revendications 1 à 7, dans lequel les moyens de chauffage (12) sont une pompe à chaleur, et une pression de réfrigérant sur un côté haute pression de la pompe à chaleur est inférieure à la pression critique.

9. Système de stockage de chaleur selon l'une quelconque des revendications 1 à 8, dans lequel le liquide est de l'eau, et le système de stockage de chaleur est utilisé en tant que système d'alimentation en eau chaude du type à stockage d'eau chaude (1).
